# EUROPEAN PATENT APPLICATION

(11) **EP 3 902 279 A1**
(43) Date of publication of application: **27.10.2021**
(21) Application number: 19899397.4
(22) Date of filing: 17.01.2019
(51) Int. Cl.: H04N 21/643, H04N 21/258, H04N 21/239, H04N 21/472

(54) **AUDIO AND VIDEO STREAM DISTRIBUTION METHOD IN AUDIO AND VIDEO STREAM DISTRIBUTION SYSTEM, AND DYNAMIC PARENT NODE**

(30) Priority: 21.12.2018 CN 201811573280
(71) Applicant: Wangsu Science & Technology Co., Ltd., Shanghai 200030 (CN)
(72) Inventor: JIANG, Shengjie, Shanghai 200030 (CN)
(74) Representative: De Arpe Tejero, Manuel
(86) International application number: PCT/CN2019/072182
(87) International publication number: WO 2020/124726

(57) **Abstract**

A method for distributing an audio/video stream in an audio/video stream distribution system, and a dynamic parent node are provided, wherein the system includes an information exchange center and at least two distribution subsystems divided by areas, wherein the distribution subsystem includes an edge node layer, a static parent node layer, and a dynamic parent node layer. The method includes: receiving a stream-pulling request initiated by a stream-pulling client, and determining whether there exists an audio/video stream to which the stream-pulling request is directed in the first dynamic parent node, wherein the stream-pulling request includes an area identity provided by the information exchange center; determining a second dynamic parent node in a second distribution subsystem corresponding to the area identity based on pre-configured subarea information when there does not exist the audio/video stream in the first dynamic parent node; and obtaining the audio/video stream from the second dynamic parent node, and feeding back the audio/video stream to the stream-pulling client.

## Description

### TECHNICAL FIELD

The present disclosure relates to the field of Internet technology, and more particularly, to a method for distributing an audio/video stream in an audio/video stream distribution system, and a dynamic parent node.

### BACKGROUND

With the continuous development of Internet technology and network bandwidths, audio/video resources in networks are also increasing. At present, people tend to rely on real-time audio/video communications. For example, many applications can support functions such as live streaming online, interactive microphone connection, and online education, etc. In existing real-time audio/video communications, Transmission Control Protocol (TCP) is generally used for data transmission. However, data transmission based on TCP may cause a high delay, which may have a negative effect on user's viewing and use experience. In view of this, at present transmission of audio/video streams may be implemented based on Web Real-Time Communication (WebRTC) technology, which can effectively reduce data delay and thus improve the user experience.

When the audio/video streams are transmitted based on the WebRTC technology, areas where user clients are located may be different from areas where the audio/video streams are stored, which may cause frequent cross-border transmissions. Therefore, at present there is an urgent need for an effective method for cross-border data transmission.

### SUMMARY

An objective of the present disclosure is to provide a method for distributing an audio/video stream in an audio/video stream distribution system, and a dynamic parent node, which can implement cross-border transmission of the audio/video stream.

To achieve the above objective, in one aspect, the present disclosure provides a method for distributing an audio/video stream in an audio/video stream distribution system. The system includes an information exchange center and at least two distribution subsystems divided by areas. The distribution subsystem includes an edge node layer, a static parent node layer, and a dynamic parent node layer. The method includes: initiating, by a stream-pulling client, an area query request to the information exchange center, wherein the area query request includes a stream identity of the audio/video stream to be pulled; after receiving an area identity corresponding to the stream identity fed back by the information exchange center, initiating, by the stream-pulling client, a stream-pulling request directing to the audio/video stream to a first edge node in the edge node layer of a first distribution subsystem, wherein the stream-pulling request includes the area identity; and the stream-pulling request is scheduled to a first dynamic parent node in the dynamic parent node layer through the static parent node layer in the first distribution subsystem, and when there does not exist the audio/video stream in the first dynamic parent node, determining, by the first dynamic parent node, a second dynamic parent node in a second distribution subsystem corresponding to the area identity based on pre-configured subarea information, and feeding back the audio/video stream to the stream-pulling client after obtaining the audio/video stream from the second dynamic parent node.

To achieve the above objective, in another aspect, the present disclosure provides a method for distributing an audio/video stream in an audio/video stream distribution system. The system includes an information exchange center and at least two distribution subsystems divided by areas. The method is applied to a first dynamic node of a first distribution subsystem. The method includes: receiving a stream-pulling request initiated by a stream-pulling client, and determining whether there exists an audio/video stream to which the stream-pulling request is directed in the first dynamic parent node, wherein the stream-pulling request includes an area identity provided by the information exchange center; determining a second dynamic parent node in a second distribution subsystem corresponding to the area identity based on pre-configured subarea information when there does not exist the audio/video stream in the first dynamic parent node; and obtaining the audio/video stream from the second dynamic parent node, and feeding back the audio/video stream to the stream-pulling client.

To achieve the above objective, in still another aspect, the present disclosure also provides a dynamic parent node, which includes a memory and a processor. The memory is configured to store a computer program, and when the computer program is executed by the processor, the above method for distributing an audio/video stream is implemented.

As can be seen from the above technical solutions provided by the present disclosure, a constructed distribution system may include an information exchange center and a plurality of distribution subsystems divided by areas. Each of the distribution subsystems may include a multilayer structure comprising an edge node layer, a static parent node layer, and a dynamic parent node layer. The stream-pushing client may sequentially push the audio/video stream to a certain dynamic parent node of the current distribution subsystem via the edge node layer, the static parent node layer, and the dynamic parent node layer. Meanwhile, the stream-pushing client may associate, according to an area where an edge node receiving a stream-pushing request is located, an area identity of the area with a stream identity of a pushed audio/video stream, and store the associated area identity and the stream identity in the information exchange center. In this way, when a stream-pulling client needs to pull the audio/video stream, the stream-pulling client may first search the area identity corresponding to the audio/video stream from the information exchange center, and then attempt to obtain the audio/video stream through a dynamic parent node in the nearby distribution subsystem. If there does not exist the audio/video stream in the dynamic parent node of the nearby distribution subsystem, a remaining distribution subsystem corresponding to the area identity associated with the audio/video stream may be searched according to subarea information pre-configured in the dynamic parent node. Next, the dynamic parent node of the nearby distribution subsystem may obtain the audio/video stream from the dynamic parent node of the remaining distribution subsystem in a cross-border manner, and feed back the obtained audio/video stream to the stream-pulling client. In this way, according to the technical solutions provided by embodiments of the present disclosure, cross-border transmission of an audio/video stream can be implemented, and thus the required audio/video stream can be efficiently provided to a user.

### BRIEF DESCRIPTION OF THE DRAWINGS

To describe the technical solutions in the embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 is a schematic structural diagram of an audio/video stream distribution system according to an embodiment of the present disclosure;
FIG. 2 is a schematic diagram of a stream-pushing process according to an embodiment of the present disclosure;
FIG. 3 is a schematic diagram of a stream-pulling process according to an embodiment of the present disclosure;
FIG. 4 is a flowchart of a method for distributing an audio/video stream performed by a dynamic parent node according to an embodiment of the present disclosure; and
FIG. 5 is a schematic structural diagram of a dynamic parent node according to an embodiment of the present disclosure.

### DETAILED DESCRIPTION

To make the objectives, technical solutions and advantages of the present disclosure clearer, embodiments of the present disclosure are further described as below in details with reference to the accompanying drawings.

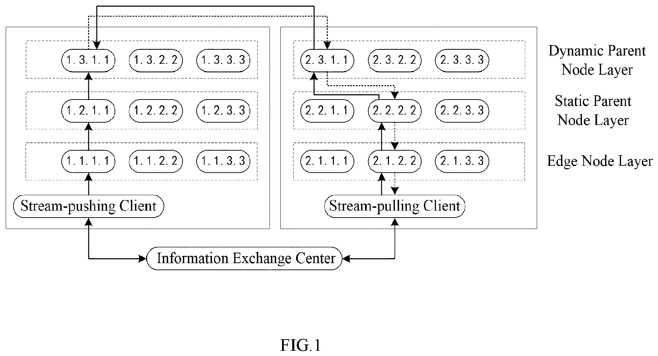

The present disclosure provides a method for distributing an audio/video stream, which may be applied to an audio/video stream distribution system as shown in FIG. 1. Referring to FIG. 1, the audio/video stream distribution system may include an information exchange center and at least two distribution subsystems divided by areas. To facilitate the description of the technical solutions of the present disclosure, only two distribution subsystems are listed in FIG. 1. However, in practical applications, more distribution subsystems may be provided. Each of the distribution subsystems may include an edge node layer, a static parent node layer, and a dynamic parent node layer. The edge node layer, the static parent node layer and the dynamic parent node layer may respectively include one or more edge nodes, static parent nodes, and dynamic parent nodes. In the present disclosure, the edge node, the static parent node and the dynamic parent node may be node servers having different functions. The edge node may communicate with a user client. For example, the edge node may receive a stream-pulling request or a stream-pushing request transmitted from the user client, and may also receive an audio/video stream uploaded by the user client or feed back the audio/video stream to the user client. Both the static parent node and the dynamic parent node may be used as a relaying and forwarding device for the audio/video stream, the difference is only in that the static parent node is in a middle layer of the distribution subsystem, and the static parent node may continue to be expanded as one edge node layer, multiple static parent node layers, and one dynamic parent node layer. In addition, edge nodes and static parent nodes may be provided in groups, a group of edge nodes and a group of static parent nodes may form a small system, and each small system is independent. The dynamic parent node is located at the top layer of the distribution subsystem and cannot continue to be expanded. Furthermore, the dynamic parent node is not grouped and is configured to communicate with each small system.

In practical applications, each of the distribution subsystems is divided by areas, and thus each of the distribution subsystems may have its own area identity as shown in FIG 1. For example, if the first distribution subsystem is located in the United States, the area identity of the first distribution subsystem may be US, and if the second distribution subsystem is located in China, the area identity of the second distribution subsystem may be CN. To achieve cross-area data transmission, subarea information may be pre-configured in the dynamic parent node of each distribution subsystem. The subarea information may include system information of a remaining distribution subsystem except the current distribution subsystem. For example, for the first distribution subsystem, the subarea information configured for each dynamic parent node may include the system information of the second distribution subsystem. However, for the second distribution subsystem, the subarea information configured for each dynamic parent node may include the system information of the first distribution subsystem. The system information may include an IP address of each dynamic parent node in the dynamic parent node layer of the remaining distribution subsystem and the area identity of an area where the remaining distribution subsystem is located. For example, for the first distribution subsystem, the subarea information configured for each dynamic parent node may be shown as below:

```
       {
   "area": "CN",
   "upstream_ips": ["1.3.1.1", "1.3.2.2", "1.3.3.3"]
       }
```

in which "area": "CN" represents that the area identity of the second distribution subsystem is China, and upstream_ips is indicative of the IP address of each dynamic parent node in the second distribution subsystem.

Similarly, for the second distribution subsystem, the subarea information configured for each dynamic parent node may be shown as below:

```
     {
        "area": "US",
        "upstream_ips": ["2.3.1.1", "2.3.2.2", "2.3.3.3"]
     }
```

in which "area": "US" represents that the area identity of the first distribution subsystem is the United States, and upstream_ips is indicative of the IP address of each dynamic parent node in the first distribution subsystem.

Of course, in practical applications, the number of the distribution subsystems may be more than two, so in the dynamic parent node of one of the distribution subsystems, the system information of each of other distribution subsystems may also be configured.

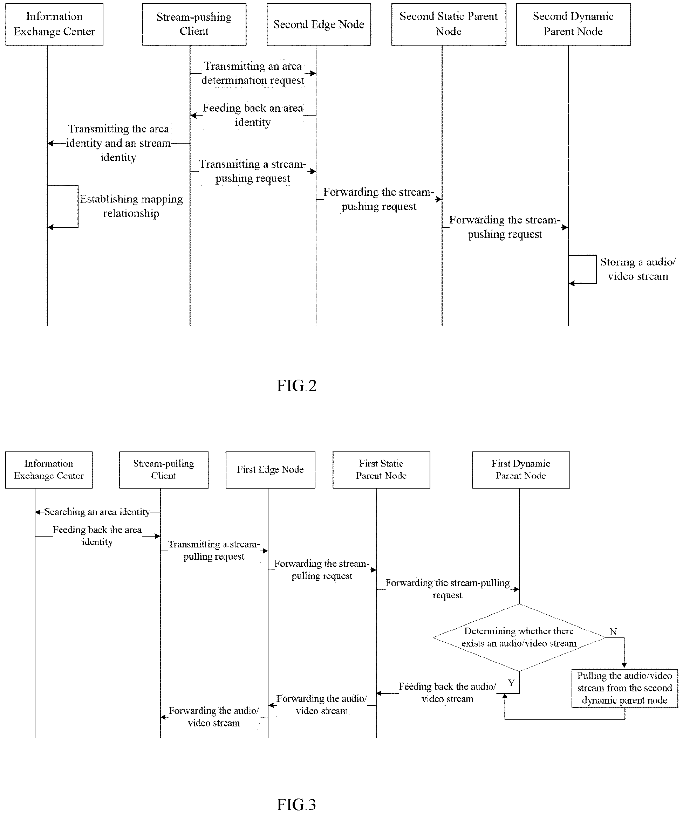

The method for distributing an audio/video stream in the audio/video stream distribution system provided by the embodiments of the present disclosure may include a stream-pushing process and a stream-pulling process. Specifically, with reference to FIG. 1 and FIG. 2, the stream-pushing process may include a plurality of steps as below.

S11: establishing, by a stream-pushing client, a connection with a second edge node in the edge node layer of the second distribution subsystem; and initiating, by the stream-pushing client, an area determination request to the second edge node to determine the area identity of an area where the second edge node is located.

In one embodiment, when the stream-pushing client needs to upload a audio/video stream, the stream-pushing client may establish a communication connection with the second edge node in the second distribution subsystem nearby. For example, the second edge node may be the edge node with the IP address of 1.1.1.1 in FIG. 1. After establishing the communication connection with the edge node, the stream-pushing client may initiate an area determination request to this edge node. After receiving the area determination request, this edge node may feed back the area identity (CN) representative of China to the stream-pushing client according to the area (China) where this edge node is located.

S12: reporting, by the stream-pushing client, the stream identity of the audio/video stream and the area identity of the area where the second edge node is located to the information exchange center, such that the information exchange center establishes a mapping relationship between the stream identity and the area identity.

In one embodiment, after receiving the area identity of the area where the second edge node is located, the stream-pushing client may transmit the stream identity of the audio/video stream and the area identity together to the information exchange center. In this way, the information exchange center may establish a mapping relationship between the stream identity and the area identity. The mapping relationship may indicate that in which area the stream-pushing client uploads the audio/video stream.

S13: pushing, by the stream-pushing client, the audio/video stream to the second edge node.

In one embodiment, after obtaining the area identity corresponding to the second edge node, the stream-pushing client may construct a stream-pushing request directing to the second edge node, and upload the audio/video stream to the second edge node according to the stream-pushing request. Specifically, the stream-pushing request may include a communication address of the second edge node, a type identity representative of stream pushing, the stream identity of the audio/video stream to be pulled, and the area identity. For example, the stream-pushing request directing to the second edge node may be as follows:
http://1.1.1.1?type=publish&stream=test_stream&area=CN

In the stream-pushing request, 1.1.1.1 represents the IP address of the second edge node. The "type" may serve as the above-mentioned type identity, and a value of the type identity is "publish", which indicates that it is under a stream-pushing scenario at this moment. The "stream=test_stream" may indicate that the stream identity of the current audio/video stream is test_stream. The "area=CN" indicates that the area identity corresponding to the current audio/video stream is CN.

S14: after receiving the audio/video stream, scheduling, by the second edge node, the audio/video stream to a second static parent node in the static parent node layer of the second distribution subsystem, such that the second edge node pushes the audio/video stream to the second static parent node.

S15: after receiving the audio/video stream to be pulled, scheduling, by the second static parent node, the audio/video stream to be pulled to the second dynamic parent node in the dynamic parent node layer of the second distribution subsystem, such that the second static parent node pushes the audio/video stream to be pulled to the second dynamic parent node.

S16: receiving and storing, by the second dynamic parent node, the audio/video stream to be pulled.

In one embodiment, the audio/video stream uploaded by the stream-pushing client generally needs to be stored in the dynamic parent node at the uppermost layer. Therefore, after the second edge node receives the audio/video stream uploaded by the stream-pushing client, the audio/video stream may be further scheduled by the system to a static parent node at an upper layer. For example, the audio/video stream may be scheduled to the second static parent node whose IP address is 1.2.1.1. In this way, the second edge node may construct a stream-pushing request directing to the second static parent node, and the stream-pushing request may be as follows:
http://1.2.1.1?type=publish&stream=test_stream&area=CN

Compared with the stream-pushing request initiated by the stream-pushing client, only an IP address is changed in the stream-pushing request initiated by the second edge node, and specifically this IP address is replaced with the IP address of the second static parent node.

Similarly, after the second static parent node receives the audio/video stream uploaded by the second edge node, the audio/video stream may be further scheduled by the system to the dynamic parent node at an upper layer. For example, the audio/video stream may be scheduled to the second dynamic parent node whose IP address is 1.3.1.1. In this way, the second static parent node may construct a stream-pushing request directing to the second dynamic parent node, and the stream-pushing request may be as follows:
http://1.3.1.1?type=publish&stream=test_stream&area=CN

Compared with the stream-pushing request initiated by the second edge node, also only an IP address is changed in the stream-pushing request initiated by the second static parent node, and specifically this IP address is replaced with the IP address of the second dynamic parent node.

In this way, the audio/video stream uploaded by the stream-pushing client is finally pushed to the second dynamic parent node, and thus the second dynamic parent node may store the audio/video stream.

With reference to FIG. 1 and FIG. 3, the stream-pulling process may include a plurality of steps as below.

S21: initiating, by a stream-pulling client, an area query request to the information exchange center, wherein the area query request includes a stream identity of the audio/video stream to be pulled.

In one embodiment, when the stream-pulling client wants to obtain a certain audio/video stream, the stream-pulling client may initiate an area query request to the information exchange center, wherein the area query request may include a stream identity of the audio/video stream to be pulled. For example, the area query request may carry the stream identity of the above test_stream.

After receiving the area query request, the information exchange center may extract the stream identity in the area query request, and determine an area identity (CN) to which the stream identity is mapped as the area identity fed back to the stream-pulling client according to the above established mapping relationship. In this way, when the stream-pulling client wants to obtain the audio/video stream whose stream identity is test_stream, the information exchange center may feed back the area identity (CN) to the stream-pulling client.

S22: after receiving an area identity corresponding to the stream identity fed back by the information exchange center, initiating, by the stream-pulling client, a stream-pulling request directing to the audio/video stream to a first edge node in the edge node layer of a first distribution subsystem, wherein the stream-pulling request includes the area identity.

In one embodiment, after receiving the area identity fed back by the information exchange center, the stream-pulling client may establish a connection with the first edge node in the first distribution subsystem nearby, and may initiate a stream-pulling request directing to the audio/video stream to the first edge node. The stream-pulling request may include the area identity obtained from the information exchange center, a communication address of the first edge node, a type identity representative of stream pulling, and the stream identity of the audio/video stream to be pulled. For example, the stream-pulling request transmitted by the stream-pulling client to the first edge node may be as follows:
http://2.1.2.2?type=subscribe&stream=test_stream&area=CN

in which 2.1.2.2 represents the IP address of the first edge node. The "type" may serve as the above-mentioned type identity, and a value of the type identity is "subscribe", which indicates that it is under a stream-pulling scenario at this moment. The "stream=test_stream" may indicate that the stream identity of the audio/video stream to be pulled is test_stream. The "area=CN" indicates that the area identity corresponding to the audio/video stream to be pulled is CN.

S23: the stream-pulling request is scheduled to a first dynamic parent node in the dynamic parent node layer through the static parent node layer in the first distribution subsystem, and if there does not exist the audio/video stream in the first dynamic parent node, determining, by the first dynamic parent node, a second dynamic parent node in a second distribution subsystem corresponding to the area identity based on pre-configured subarea information, and feeding back the audio/video stream to the stream-pulling client after obtaining the audio/video stream from the second dynamic parent node.

In one embodiment, the stream-pulling request initiated by the stream-pulling client may also be forwarded through the edge node layer and the static parent node layer, and finally reach the dynamic parent node layer. Specifically, the first edge node may be scheduled by the system to the first static parent node whose IP address is 2.2.2.2. In this way, the first edge node may initiate, to the first static parent node, the following stream-pulling request:
http://2.2.2.2?type=subscribe&stream=test_stream&area=CN

In the stream-pulling request, only the IP address of the first edge node is replaced with the IP address of the first static parent node.

Similarly, the first static parent node may be scheduled to the first dynamic parent node whose IP address is 2.3.1.1. In this way, the first static parent node may initiate, to the first dynamic parent node, the following stream-pulling request:
http://2.3.1.1?type=subscribe&stream=test_stream&area=CN

In the stream-pulling request, only the IP address of the first static parent node is replaced with the IP address of the first dynamic parent node.

After receiving the stream-pulling request transmitted from the first static parent node, the first dynamic parent node may extract the stream identity and the area identity in the stream-pulling request, and then may determine whether there exists an audio/video stream to which the stream identity is directed locally. If there exists the audio/video stream to which the stream identity is directed locally, the first dynamic parent node may directly feed back the audio/video stream to the stream-pulling client. If there does not exist the audio/video stream to which the stream identity is directed locally, the first dynamic parent node needs to obtain the audio/video stream corresponding to the stream identity from a remaining distribution subsystem through cross-area communication.

Specifically, the first dynamic parent node may search pre-configured subarea information, and may search, from the subarea information, the IP address of the dynamic parent node corresponding to the area identity carried in the stream-pulling request. For example, for the area identity of CN, the IP address of the corresponding dynamic parent node may be searched as below:
"1.3.1.1", "1.3.2.2", "1.3.3.3"

In practical applications, the first dynamic parent node may sequentially attempt to pull the audio/video stream corresponding to the stream identity from the IP address of each dynamic parent node described above, until this audio/video stream is successfully pulled. In this way, the first dynamic parent node may select, from dynamic parent nodes corresponding to the searched IP address of the dynamic parent node, a dynamic parent node storing the audio/video stream as the second dynamic parent node described in Step S23. Subsequently, the first dynamic parent node may pull the audio/video stream from the second dynamic parent node, and feed back the audio/video stream to the stream-pulling client.

In practical applications, when the first dynamic parent node feeds back the audio/video stream to the stream-pulling client, considering that the stream-pulling request of the stream-pulling client is scheduled to the first dynamic parent node through the edge node layer and the static parent node layer, the first dynamic parent node may feed back the audio/video stream to the stream-pulling client after the audio/video stream is scheduled through the static parent node layer and the edge node layer in the first distribution subsystem according to a scheduling path of the stream-pulling request. For example, in FIG. 1, the stream-pulling request initiated by the stream-pulling client is successively scheduled through a first edge node whose IP address is 2.1.2.2 and a first static parent node whose IP address is 2.2.2.2. In this case, similarly, when the first dynamic parent node feeds back the audio/video stream to the stream-pulling client, the first dynamic parent node may also transmit the audio/video stream to the stream-pulling client after the audio/video stream is successively scheduled through the first static parent node whose IP address is 2.2.2.2 and the first edge node whose IP address is 2.1.2.2.

As can be seen from the above description, pushing and pulling the audio/video stream may be implemented by dividing the distribution subsystems for different areas, and cross-area transmission of the audio/video stream can be implemented.

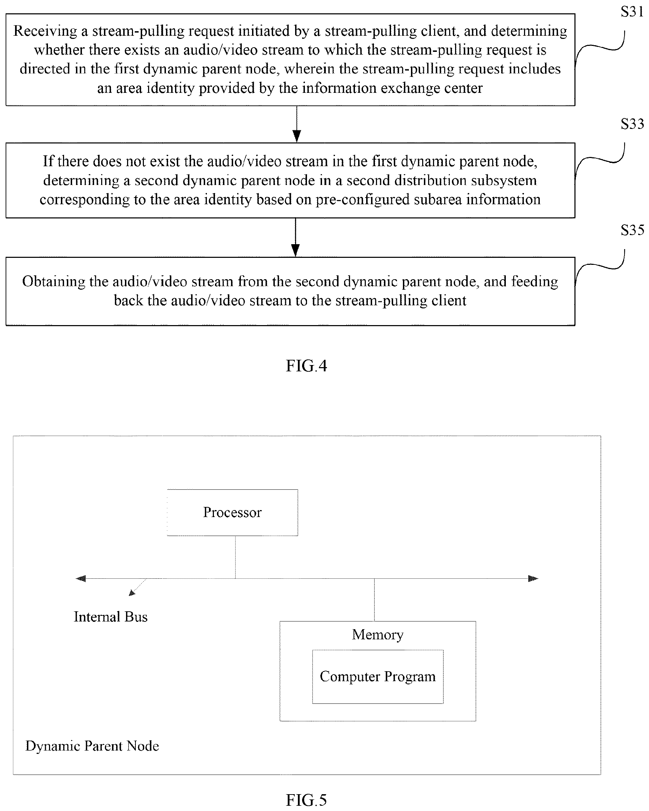

The present disclosure also provides a method for distributing an audio/video stream in an audio/video stream distribution system, which may be performed by the above dynamic parent node. Referring to FIG. 4, this method may include following steps.
S31: receiving a stream-pulling request initiated by a stream-pulling client, and determining whether there exists an audio/video stream to which the stream-pulling request is directed in the first dynamic parent node, wherein the stream-pulling request includes an area identity provided by the information exchange center.
S33: if there does not exist the audio/video stream in the first dynamic parent node, determining a second dynamic parent node in a second distribution subsystem corresponding to the area identity based on pre-configured subarea information.
S35: obtaining the audio/video stream from the second dynamic parent node, and feeding back the audio/video stream to the stream-pulling client.

In one embodiment, the method also includes:
If there exists the audio/video stream in the first dynamic parent node, feeding back the audio/video stream to the stream-pulling client.

In one embodiment, the stream-pulling request is received by the first dynamic parent node after being scheduled through the edge node layer and the static parent node layer in the first distribution subsystem.

Correspondingly, the feeding back the audio/video stream to the stream-pulling client includes:
feeding back, by the first dynamic parent node, the audio/video stream to the stream-pulling client after the audio/video stream is scheduled through the static parent node layer and the edge node layer in the first distribution subsystem according to a scheduling path of the stream-pulling request.

In one embodiment, the subarea information pre-configured in the first dynamic parent node includes system information of a remaining distribution subsystem except the first distribution subsystem. The system information includes an IP address of each dynamic parent node in the dynamic parent node layer of the remaining distribution subsystem and the area identity of an area where the remaining distribution subsystem is located.

In one embodiment, the determining a second dynamic parent node in a second distribution subsystem corresponding to the area identity based on pre-configured subarea information includes:
searching an IP address of a dynamic parent node corresponding to the area identity in the subarea information, and determining a dynamic parent node storing the audio/video stream from dynamic parent nodes corresponding to the IP address of the dynamic parent node as the second dynamic parent node.

Referring to FIG. 5, the present disclosure also provides a dynamic parent node, which may include a memory and a processor. The memory is configured to store a computer program, and when the computer program is executed by the processor, the method for distributing an audio/video stream described above may be implemented. Specifically, as shown in FIG. 5, at the hardware level, the dynamic parent node may include a processor, an internal bus, and a memory. The memory may include an internal memory and a non-volatile memory. The processor reads the corresponding computer program from the non-volatile memory into the internal memory and then runs the computer program. A person of ordinary skill in the art may understand that the structure as shown in FIG. 5 is merely exemplary, and does not limit the structures of the foregoing identification devices. For example, the dynamic parent node may further include more or less components than that as shown in FIG. 5. For example, the dynamic parent node may further include other processing hardware such as a graphics processing unit (GPU), or has a configuration different from that as shown in FIG. 5. Of course, the present disclosure does not exclude other implementations other than the software implementation, such as a logic device or a combination of hardware and software, and so on.

In the embodiment, the processor may include a central processing unit (CPU) or a graphics processing unit (GPU), or of course may also include other single-chip microcomputers, logic gate circuits, integrated circuits and so on that have logic processing capabilities, or appropriate combinations thereof. The memory set forth in the embodiment may be a memory device configured to store information. In a digital system, a device that can store binary data may be a memory. In an integrated circuit, a circuit with storage function that has no physical form may also be a memory, such as RAM, FIFO, etc. In a system, a storage device having a physical form may also be referred to as a memory and so on. When implemented, the memory may also be implemented in the form of cloud storage, a specific implementation of which is not limited in this specification.

It is to be noted that reference for the specific implementation of the dynamic parent node in this specification may be made to the description of the method embodiments, and thus repeated description is omitted herein.

As can be seen from the above technical solutions provided by the present disclosure, a constructed distribution system may include an information exchange center and a plurality of distribution subsystems divided by areas. Each of the distribution subsystems may include a multilayer structure comprising an edge node layer, a static parent node layer, and a dynamic parent node layer. The stream-pushing client may sequentially push the audio/video stream to a certain dynamic parent node of the current distribution subsystem through the edge node layer, the static parent node layer, and the dynamic parent node layer. Meanwhile, the stream-pushing client may associate, according to an area where an edge node receiving a stream-pushing request is located, an area identity of the area with a stream identity of a pushed audio/video stream, and store the associated area identity and the stream identity in the information exchange center. In this way, when the stream-pushing client needs to pull the audio/video stream, the stream-pushing client may first search the area identity corresponding to the audio/video stream in the information exchange center, and then attempt to obtain the audio/video stream through a dynamic parent node in the nearby distribution subsystem. If there does not exist the audio/video stream in the dynamic parent node of the nearby distribution subsystem, a remaining distribution subsystem corresponding to the area identity associated with the audio/video stream may be searched according to subarea information pre-configured in the dynamic parent node. Next, the dynamic parent node of the nearby distribution subsystem may obtain the audio/video stream from a dynamic parent node of the remaining distribution subsystem in a cross-border manner, and feed back the obtained audio/video stream to the stream-pulling client. In this way, according to the technical solutions provided by embodiments of the present disclosure, cross-border transmission of an audio/video stream can be implemented, and thus the required audio/video stream can be efficiently provided to users.

From the description of the foregoing implementations, it is clear to those skilled in the art that the various embodiments may be implemented in the form of software with a necessary general hardware platform, or implemented in the form of hardware. Based on such an understanding, the above technical solutions in essence or that part of contribution to the prior art may be embodied in the form of software products, which may be stored in computer-readable storage media, such as a ROM/RAM, a diskette or an optical disk and the like, including some instructions to direct a computing device (may be a personal computer, a server, or a network device, etc.) to implement each disclosed embodiment or methods described in some parts of the disclosed embodiments.

The foregoing descriptions are merely preferred embodiments of the present disclosure, and are not intended to limit the present disclosure. Any modification, equivalent replacement and improvement made within the spirit and principle of the present disclosure shall fall within the protection scope of the present disclosure.

## Claims

1. A method for distributing an audio/video stream in an audio/video stream distribution system, wherein the system comprises an information exchange center and at least two distribution subsystems divided by areas, the distribution subsystem comprises an edge node layer, a static parent node layer, and a dynamic parent node layer; and the method comprises:
initiating, by a stream-pulling client, an area query request to the information exchange center, wherein the area query request comprises a stream identity of the audio/video stream to be pulled;
initiating, by the stream-pulling client, a stream-pulling request directing to the audio/video stream to a first edge node in the edge node layer of a first distribution subsystem after receiving an area identity corresponding to the stream identity fed back by the information exchange center, wherein the stream-pulling request comprises the area identity; and
the stream-pulling request is scheduled to a first dynamic parent node in the dynamic parent node layer through the static parent node layer in the first distribution subsystem, and when there does not exist the audio/video stream in the first dynamic parent node, determining, by the first dynamic parent node, a second dynamic parent node in a second distribution subsystem corresponding to the area identity based on pre-configured subarea information, and feeding back the audio/video stream to the stream-pulling client after obtaining the audio/video stream from the second dynamic parent node.

2. The method according to claim 1, wherein the audio/video stream to be pulled is uploaded to the second dynamic parent node by a stream-pushing client; and correspondingly, before initiating, by the stream-pulling client, the area query request to the information exchange center, the method further comprises:
establishing, by the stream-pushing client, a connection with a second edge node in the edge node layer of the second distribution subsystem, and initiating, by the stream-pushing client, an area determination request to the second edge node to determine the area identity of an area where the second edge node is located; and
reporting, by the stream-pushing client, the stream identity of the audio/video stream to be pulled and the area identity of the area where the second edge node is located to the information exchange center, such that the information exchange center establishes a mapping relationship between the stream identity and the area identity.

3. The method according to claim 2, wherein after initiating, by the stream-pulling client, the area query request to the information exchange center, the method further comprises:
extracting, by the information exchange center, the stream identity in the area query request, and determining an area identity to which the stream identity is mapped as the area identity fed back to the stream-pulling client according to the established mapping relationship.

4. The method according to claim 2, further comprising:
pushing, by the stream-pushing client, the audio/video stream to be pulled to the second edge node;
scheduling, by the second edge node, the audio/video stream to be pulled to a second static parent node in the static parent node layer of the second distribution subsystem after receiving the audio/video stream to be pulled, such that the second edge node pushes the audio/video stream to be pulled to the second static parent node;
scheduling, by the second static parent node, the audio/video stream to be pulled to the second dynamic parent node in the dynamic parent node layer of the second distribution subsystem after receiving the audio/video stream to be pulled, such that the second static parent node pushes the audio/video stream to be pulled to the second dynamic parent node; and
receiving and storing, by the second dynamic parent node, the audio/video stream to be pulled.

5. The method according to claim 2, wherein the pushing, by the stream-pushing client, the audio/video stream to be pulled to the second edge node comprises:
constructing, by the stream-pushing client, a stream-pushing request directing to the second edge node, and uploading the audio/video stream to be pulled to the second edge node according to the stream-pushing request; wherein the stream-pushing request comprises a communication address of the second edge node, a type identity representative of stream pushing, the stream identity of the audio/video stream to be pulled, and the area identity.

6. The method according to claim 1, wherein the stream-pulling request initiated by the stream-pulling client further comprises a communication address of the first edge node, a type identity representative of stream pulling, and the stream identity of the audio/video stream to be pulled.

7. The method according to claim 1, further comprising:
when there exists the audio/video stream in the first dynamic parent node, feeding back, by the first dynamic parent node, the audio/video stream to the stream-pulling client.

8. The method according to claim 1 or 7, wherein the feeding back, by the first dynamic parent node, the audio/video stream to the stream-pulling client comprises:
feeding back, by the first dynamic parent node, the audio/video stream to the stream-pulling client after the audio/video stream is scheduled through the static parent node layer and the edge node layer of the first distribution subsystem according to a scheduling path of the stream-pulling request.

9. The method according to claim 1, wherein the subarea information pre-configured in the first dynamic parent node comprises system information of a remaining distribution subsystem except the first distribution subsystem; wherein the system information comprises an IP address of each dynamic parent node in the dynamic parent node layer of the remaining distribution subsystem and the area identity of an area where the remaining distribution subsystem is located.

10. The method according to claim 1 or 9, wherein the determining, by the first dynamic parent node, a second dynamic parent node in a second distribution subsystem corresponding to the area identity based on pre-configured subarea information comprises:
searching, by the first dynamic parent node, an IP address of a dynamic parent node corresponding to the area identity in the subarea information, and determining a dynamic parent node storing the audio/video stream from dynamic parent nodes corresponding to the IP address of the dynamic parent node as the second dynamic parent node.

11. A method for distributing an audio/video stream in an audio/video stream distribution system, wherein the system comprises an information exchange center and at least two distribution subsystems divided by areas, the method is applied to a first dynamic node of a first distribution subsystem, and the method comprises:
receiving a stream-pulling request initiated by a stream-pulling client, and determining whether there exists an audio/video stream to which the stream-pulling request is directed in the first dynamic parent node, wherein the stream-pulling request comprises an area identity provided by the information exchange center;
determining a second dynamic parent node in a second distribution subsystem corresponding to the area identity based on pre-configured subarea information when there does not exist the audio/video stream in the first dynamic parent node; and
obtaining the audio/video stream from the second dynamic parent node, and feeding back the audio/video stream to the stream-pulling client.

12. The method according to claim 11, further comprising:
feeding back the audio/video stream to the stream-pulling client when there exists the audio/video stream in the first dynamic parent node.

13. The method according to claim 11 or 12, wherein the stream-pulling request is received by the first dynamic parent node after being scheduled through the edge node layer and the static parent node layer in the first distribution subsystem; and
correspondingly, the feeding back the audio/video stream to the stream-pulling client comprises:
feeding back, by the first dynamic parent node, the audio/video stream to the stream-pulling client after the audio/video stream is scheduled through the static parent node layer and the edge node layer in the first distribution subsystem according to a scheduling path of the stream-pulling request.

14. The method according to claim 11, wherein the subarea information pre-configured in the first dynamic parent node comprises system information of a remaining distribution subsystem except the first distribution subsystem; wherein the system information comprises an IP address of each dynamic parent node in the dynamic parent node layer of the remaining distribution subsystem and an area identity of an area where the remaining distribution subsystem is located.

15. The method according to claim 11 or 14, wherein the determining a second dynamic parent node in a second distribution subsystem corresponding to the area identity based on pre-configured subarea information comprises:
searching an IP address of a dynamic parent node corresponding to the area identity in the subarea information, and determining a dynamic parent node storing the audio/video stream from dynamic parent nodes corresponding to the IP address of the dynamic parent node as the second dynamic parent node.

16. A dynamic parent node, comprising a memory and a processor, wherein the memory is configured to store a computer program, and when the computer program is executed by the processor, the method according to any one of claims 11 to 15 is implemented.
